# EUROPÄISCHE PATENTSCHRIFT

(11) **EP 1 738 642 B1**
(45) Veröffentlichungstag und Bekanntmachung des Hinweises auf die Patenterteilung: **24.10.2007**
(21) Anmeldenummer: 06007791.4
(22) Anmeldetag: 13.04.2006
(51) Int. Cl.: A01K 61/00, A47L 1/12

(54) **Reinigungsvorrichtung für die Innenfläche eines Aquariumsfenster**
Device for cleaning the inner walls of an aquarium
Dispositif pour nettoyer la paroi interne d'un aquarium

(30) Priorität: 28.06.2005 DE 202005010254 U
(43) Veröffentlichungstag der Anmeldung: 03.01.2007
(73) Patentinhaber: JBL GmbH & Co. KG, 67141 Neuhofen (DE)
(72) Erfinder: Keppler, Rainer, Dr., 68766 Hockenheim (DE)
(74) Vertreter: Kesselhut, Wolf

(56) Entgegenhaltungen:
- WO-A-20/04026078

## Beschreibung

Die Erfindung betrifft eine Reinigungsvorrichtung für die Innenfläche eines Aquariumsfensters nach dem Oberbegriff des Anspruches 1.

An der Innenfläche eines Aquariumsfensters, an der Wasser ansteht, bildet sich mit der Zeit eine Schicht aus Algen etc. aus, die den Blick ins Innere des Aquariums behindern kann, sodass die darin befindlichen Fische und sonstigen Wasserlebewesen nicht mehr beobachtet werden können. Daher ist eine solche Innenfläche von Zeit zu Zeit zu reinigen. Man kann diese Reinigung manuell bewerkstelligen, indem man mit einer Reinigungseinrichtung in das Wasser hineingreift. Das bedeutet allerdings, dass Vorbereitungsarbeiten vorzunehmen sind, z.B. Entfernen der Abdeckung des Aquariums. Abgesehen von derartigem Aufwand werden die Fische und sonstigen Wasserlebewesen durch eine derartige Reinigungsarbeit gestört.

Aus der DE 200 23 270 U1 ist eine Reinigungsvorrichtung der eingangs genannten Art bekannt geworden, mit der die Innenfläche eines Aquariumsfensters ohne besondere Vorbereitungsarbeiten gereinigt werden kann. Diese Vorrichtung besteht aus zwei Körpern, in denen sich Elemente befinden, die eine magnetische Anziehungskraft aufeinander erzeugen, so dass sich beide Körper gegenseitig anziehen. Der eine Körper (Innenkörper) befindet sich im Wasser und gleitet mit seiner Reinigungsfläche an der Innenfläche des Aquariumsfensters entlang, wogegen der andere Körper (Außenkörper) an der Außenfläche manuell bewegt wird; dabei führt wegen der magnetischen Anziehungskraft der magnetischen Elemente der Außenkörper den Innenkörper mit sich, wodurch die Innenfläche des Aquariumsfensters gereinigt werden kann.

In den Eckbereichen des Aquariums sind die Aquariumsfenster, die vorzugsweise aus Glas bestehen, über eine Dichtungsmasse, die insbesondere ein Silikongummi oder -kautschuk umfasst, miteinander verbunden, wobei die Dichtungsmasse die Eckbereiche des Aquariums flüssigkeitsdicht abdichtet. Die Dichtungsmasse kann sich hierbei beispielsweise von Stirnseite zu Stirnseite oder aber von Innenfläche zu Stirnseite der aneinandergrenzenden Aquariumsfenster erstrecken und dabei auf der Innenseite der Eckbereiche hohlkehlartig ausgebildet sein. Aus der DE 200 23 270 U1 ist ersichtlich, dass die Reinigungsfläche mit den Außenseiten eine relativ scharfe Kante bildet. Wenn diese relativ scharfe Kante bei einem Reinigungsvorgang gegen die Dichtungsmasse und an ihr entlang geführt wird, besteht die Gefahr, dass die Dichtungsmasse beschädigt wird und so an dieser Stelle Algen in die Dichtfläche einwachsen können, was zur Undichtigkeit des Aquariums und Austritt von Wasser aus diesem führt.

Weiterhin ist aus der US 6, 206, 978 B1 eine Reinigungsvorrichtung bekannt, bei der die Reinigungsfläche im Bereich ihres einen Endes einen bogenförmig konvex abgerundeten, mit Reinigungsnoppen besetzten Abschnitt aufweist, um bei Aquarien mit einteilig durchgehenden Front- und Seitenfenstern auch die konkav abgerundeten Übergangsbereiche zwischen den Front- und Seitenfenstern reinigen zu können. Die beschriebene Vorrichtung eignet sich aufgrund der konvexen bogenförmigen Rundung der Reinigungsfläche zum einen nur sehr eingeschränkt zur Reinigung von Aquarien mit rechtwinklig aufeinander gesetzten mehrteiligen Fenstern, die mittels Dichtungsmasse verklebt sind; und zum anderen besteht die Gefahr, dass die im abgerundeten Bereich angeordneten Reinigungsnoppen die empfindliche Dichtungsmasse beim Reinigungsvorgang derartiger Fenster beschädigen

Aus der WO 2004/026078 A1 ist eine gattungsgemäße Reinigungsvorrichtung bekannt, bei der die Reinigungsfläche im Bereich einer ihrer Kanten eine nach Art einer Kufe abgewinkelte, bogenförmige Abschrägung aufweist. Aufgrund der konvexen Wölbung der Abschrägung eignet sich die beschriebene Reinigungsvorrichtung jedoch nur sehr beschränkt zum Reinigen von Aquarien, bei denen die Fenster mittels Dichtungsmasse verklebt sind, da die konvexe Rundung mit dem aufgebrachten rauen Reinigungsbelag beim Reinigungsvorgang in die Eckbereiche gelangt, und mit der empfindlichen Dichtungsmasse in Kontakt tritt. Weiterhin erlaubt die in der Schrift beschriebene Vorrichtung nicht, die Aquarienscheiben hinter Einbauteilen zu reinigen.

Aufgabe der Erfindung ist es daher, eine Reinigungsvorrichtung der Eingangs genannten Art zu schaffen, mit der eine Beschädigung der Dichtungsmasse durch Aufgleiten des Innenkörpers auf diese bei einem Reinigungsvorgang vermieden wird, und welche auch die Reinigung der Innenflächen hinter Einbauteilen ermöglicht.

Diese Aufgabe wird erfindungsgemäß durch die Merkmale von Anspruch 1 gelöst.

Erfindungsgemäß weist der Innenkörper im Bereich der Reinigungsfläche an diese anschließend in wenigstens einem Teilbereich des Umfangs der Reinigungsfläche eine Anschrägung oder eine im Winkel zur Reinigungsfläche verlaufende Randfläche auf, die mit der Innenfläche einen stumpfen Winkel bzw. einen Winkel größer 90° bildet. Die Randfläche ist hierbei glattwandig ausgestaltet und kann zur Anpassung an die Querschnittsform der Dichtungsmasse nicht nur eine ebene, dh. ebenflächige Form, sondern auch eine konkave, der Außenform des Dichtungsmaterials angepasste Wölbung aufweisen.

Dadurch wird erreicht, dass dann, wenn der Innenkörper in den Bereich der Dichtungsmasse gelangt, die Dichtungsmasse praktisch nicht mehr berührt wird oder auf diese nur eine so geringe Kraft ausgeübt wird, dass eine Beschädigung der Dichtungsmasse verhindert wird.

In besonders vorteilhafter Weise besitzt die Reinigungsfläche eine viereckige Umfangskontur; die Abschrägung ist dabei an wenigstens einer Seitenkante angeordnet. Die Viereckform kann eine Rechteckform oder eine quadratische Form sein; die Abschrägung kann auch an allen Seitenkanten der Reinigungsfläche angeordnet sein.

Selbstverständlich kann die Kontur der Reinigungsfläche und damit auch des Innenkörpers jede andere, insbesondere bogenförmige Form aufweisen, z.B. eine Oval- oder Kreisform.

Innerhalb eines Aquariums können Einbauten, z.B. ein Luftzuführungsrohr, oder ein Frischwasserzuführungsrohr, angeordnet sein, deren Abstand von der Innenfläche des Fensters kleiner ist als die Höhe des Innenkörpers, senkrecht zur Reinigungsfläche gemessen. Damit kann der Innenkörper nicht in den Zwischenraum zwischen den Einbauten und der Innenfläche des Fensters gelangen, so dass dort eine Reinigung mit der erfindungsgemäßen Reinigungsvorrichtung nicht möglich ist. Daher besteht die Erfindung darin, dass am Innenkörper mit der Reinigungsfläche fluchtend ein zungenartiger, ebener Vorsprung angeordnet ist, in den sich die Reinigungsfläche fortsetzt, so dass die Reinigungsfläche um die Kontur des Vorsprungs vergrößert ist. Da die Dicke des Vorsprunges, gemessen senkrecht zur Reinigungsfläche, gering sein kann, kann mit dem Vorsprung auch die Innenfläche des Fensters im Bereich der Einbauten gereinigt werden.

Der Innenkörper kann in vorteilhafter Weise aus einem Napf und einem daran befestigten Deckel ausgebildet sein; dann wird sich in bevorzugter Weise die Abschrägung und/oder der Vorsprung am Deckel befinden.

Wenn sich im Innenkörper wenigstens ein luftgefüllter Hohlraum befindet, kann der Innenkörper nach Entfernen des Außenkörpers aufschwimmen, so dass er nicht auf den Boden des Aquariums fällt.

In besonders vorteilhafter Weise kann der Innenkörper aus einem Schaumstoff mit vielen kleinen Hohlräumen hergestellt sein, in welchem Schaumstoff das magnetische Element eingebettet ist. Auch dann kann der Innenkörper schwimmen.

Weitere vorteilhafte Ausgestaltungen der Erfindung sind den weiteren Unteransprüchen zu entnehmen.

An Hand der Zeichnung, in der eine erfindungsgemäße Reinigungsvorrichtung schematisch dargestellt ist, sollen die Erfindung, vorteilhafte Ausgestaltungen und Verbesserungen sowie weitere Vorteile näher erläutert und beschrieben werden.

Es zeigen:
- Fig. 1: eine Ansicht auf die Kante eines Aquariumsfensters mit einer ersten Ausführungsform einer erfindungsgemäßen Reinigungsvorrichtung, bei der die Seitenwandungen des Innenkörpers über die Abschrägungen in die Reinigungsfläche übergehen,
- Fig. 2: eine Aufsicht auf den Innenkörper einer Reinigungsvorrichtung gemäß einer weiteren Ausführungsform der Erfindung,
- Fig. 3: eine Schnittansicht gemäß Schnittlinie III - III der Fig. 2,
- Fig. 4: eine Schnittansicht gemäß Schnittlinie IV - IV der Fig. 2, und
- Fig. 5: eine vergrößerte Darstellung einer Dichtstelle.

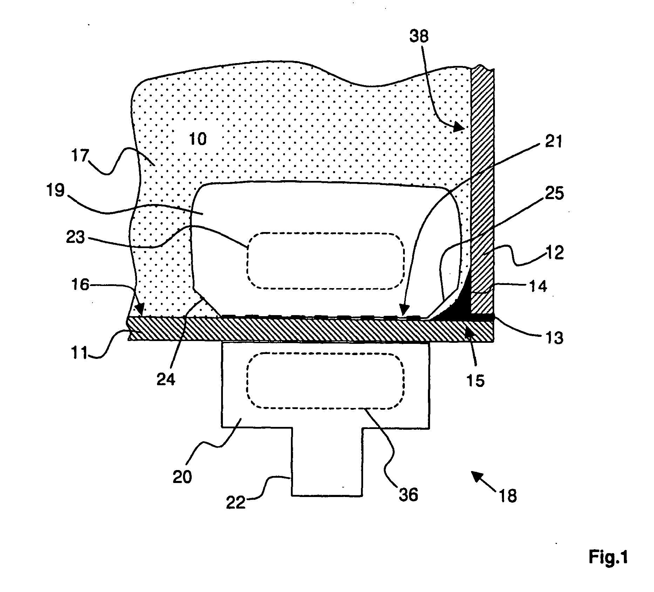

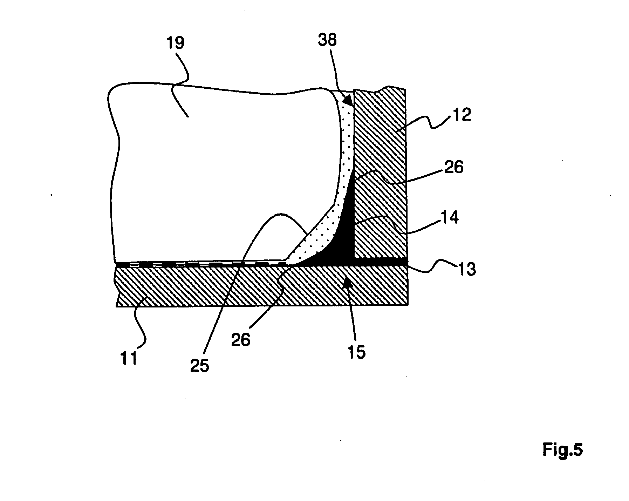

In den Figuren 1 und 5 ist von einem Aquarium 10 lediglich ein Eckbereich mit einem Teil eines ersten und zweiten Aquariumsfensters 11, 12 dargestellt, wobei eine Dichtungsmasse 15 aus Silikon die erste und zweite in einem rechten Winkel zueinander angeordneten Aquariumfenster 11, 12 nach Art einer Klebeverbindung miteinander verbindet. Hierbei weist die Dichtungsmasse einen ersten und zweiten Abschnitt 13, 14 auf, wobei im Eckbereich des Aquariums 10 der erste Abschnitt 13 die Stirnseite des zweiten Aquariumsfensters 12 und einen der Breite des zweiten Aquariumsfensters 12 entsprechenden Bereich der Innenfläche 16 des ersten Aquariumsfensters 11 miteinander verbindet. An den Innenflächen 16 , 38 des ersten und zweiten Aquariumsfensters 11, 12 steht Wasser 17 an, wobei der dem Wasser 17 zugewandte zweite Abschnitt 14 der Dichtungsmasse 15 beispielsweise eine in den Figuren gezeigte hohlkehlartige Form besitzt, deren Auslaufbereich 26 zu den Innenflächen 16, 38 des ersten und zweiten Aquariumsfenster 11, 12 etwa tangential verläuft.

Wie in Fig. gezeigt ist, liegt an dem Fenster 11 eine erste Ausführungsform einer erfindungsgemäßen Reinigungsvorrichtung 18 an, die einen Innenkörper 19 und einen Außenkörper 20 umfasst. Der Innenkörper 19 besitzt eine Reinigungsfläche 21, mit der er gegen die Innenfläche 16 des ersten Aquariumsfensters 11 anliegt. Der Außenkörper 20 besitzt eine dem Innenkörperl9 angepasste Form, wobei er einen Griff 22 oder eine Grifffläche aufweist, deren Ausgestaltung hier nicht von Bedeutung ist. Innerhalb des Innenkörpers 19 befindet sich ein Permanentmagnet 23, dem entweder ein Permanentmagnet 36 oder ein Element aus einem ferromagnetischen Material, z.B. Eisen, das im Außenkörper 20 untergebracht ist, entspricht. Wesentlich für die Erzielung einer Reinigungswirkung ist, dass sich die Elemente im Inneren der beiden Körper 19, 20 gegenseitig anziehen, so dass sie mit einer durch die Permanentmagnetenanordnung bestimmten Kraft gegen die Innenfläche 16 und Außenfläche des ersten Aquariumsfensters 11 anliegen. Dabei spielt es keine Rolle, ob je ein Permanentmagnet 23, 36 im Innen- und Außenkörper 19, 20 oder nur im Innenkörper 19 oder im Außenkörper 20 untergebracht ist. Es besteht nämlich auch die Möglichkeit, dass in einem Körper der Permanentmagnet und im anderen das ferromagnetische Material untergebracht sind. Wenn der Au-ßenkörper 20 an der Außenfläche des ersten Aquariumsfensters 11 verschoben wird, gleitet der Innenkörper 19 wegen der magnetischen Anziehungskraft mit und die Reinigungsfläche 21 reinigt die Innenfläche 16 des ersten Aquariumsfensters 11. Wie die Reinigungsfläche 21 ausgebildet ist, ist hier für die Erfindung von weniger wichtiger Bedeutung, wobei jedoch die Abschrägungen 24, 25 vorzugsweise in der gleichen Weise wie die Reinigungsfläche 21 ausgebildet sind.

Der Innenkörper 19 ist in Fig. 1 schematisch dargestellt. Erfindungsgemäß besitzt er an Endkanten der Reinigungsfläche 21 Abschrägungen 24 und 25, die unter einem Winkel α größer 90°, vorzugsweise unter einem stumpfen Winkel von beispielsweise 135° zur Reinigungsfläche 21 geneigt sind.

Der Innenkörper 19 befindet sich in der in Fig. 1 gezeigten Stellung gerade an einer Seitenkante des ersten Aquariumsfensters 11, an der sich der zweite Abschnitt 14 der Dichtungsmasse 15 befindet. Die Abschrägung 25 überdeckt den zweiten Abschnitt 14 der Dichtungsmasse 15, ohne dass der Innenkörper 19 die Dichtungsmasse 15 berührt. Insbesondere berührt der Innenkörper 19 nicht den dünnen Auslaufbereich 26 des zweiten Abschnitts 14 der Dichtungsmasse 15 auf der Innenfläche des ersten und zweiten Aquariumsfensters 11, 12.

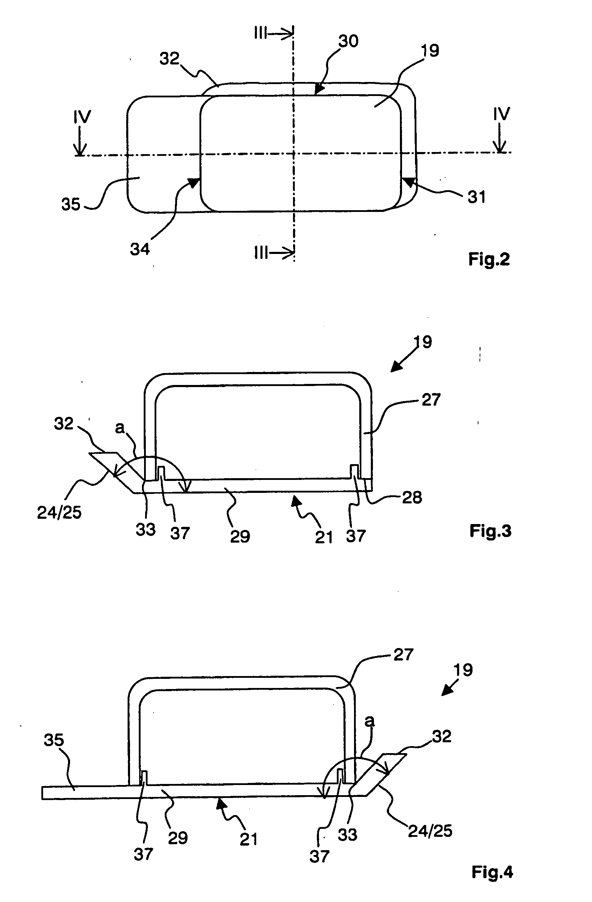

Es sei nun Bezug genommen auf die Fig. 2, in der eine Aufsicht auf den Innenkörper 19 einer weiteren Ausführungsform der Erfindung dargestellt ist. Wie aus Fig. 3 ersichtlich, ist der Innenkörper 19 aus einem Napf 27 und einem Deckel 29 zusammengesetzt. Der Deckel 29 ist gegen die freie Kante 28 der Napfwand angesetzt und damit verklebt oder beispielsweise auch thermisch verschweißt. Auf der der Reinigungsfläche 21 gegenüberliegenden Seite weist der Deckel 29 hierbei eine umlaufende Führungsleiste 37 auf, die beim Aufsetzen des Napfes 27 diesen führt und seine Position auf dem Deckel 29 bestimmt. Die Umfangskontur des Innenkörpers 17 und damit der Reinigungsfläche 21, die sich auf der Außenfläche des Deckels 29 befindet, ist bevorzugt langgestreckt rechteckig.

An der einen Längsseitenkante 31 und der einen Schmalseitenkante 30 des Deckels 29 ist erfindungsgemäß eine Leiste 32 angeformt, die mit der Reinigungsfläche 21 einen Winkel α größer 90° einschließt, der vorzugsweise dem Winkel der Abschrägungen 24, 25 entspricht. Die Leiste 32 bildet am Deckel 29 eine winklige Linie 33 aus, die zusätzlich zur Führungsleiste 37 auch zur Führung des Deckels 29 gegenüber den freien Kanten 28 des Napfes 27 dient, was beim Zusammensetzen von Napf 27 und Deckel 29 Vorteile bringen kann.

An der der Schmalseitenkante 31 entgegen gesetzten Schmalseite 34 des Innenkörpers 19 besitzt der Deckel 29 einen ebenen, flachen Vorsprung 35, der die Schmalseite 34 des Innenkörpers 19 überragt. Die Reinigungsfläche 21 des Innenkörpers 19 setzt sich in den Vorsprungbereich fort. Damit ist die gesamte Reinigungsfläche 21 um den Umfang des Vorsprunges 35 vergrößert.

Mit anderen Worten: bei der hier dargestellten Form ist der Deckel 29 länger ausgebildet als die Länge des Napfes in seiner Längsrichtung gemessen.

Mit diesem Vorsprung 35 kann auch ein Innenflächenbereich der Aquariumsfenster gereinigt werden, der sich z.B. hinter einem Luftzufuhrrohr befindet, in dem der Vorsprung in den Zwischenraum zwischen Luftzufuhrrohr und Aquariumsfenster hineingreift.

Hier ist dargestellt, dass die Abschrägung nur an einer Schmalseitenkante und einer Längsseitenkante des Deckels angeordnet ist. Natürlich kann die Abschrägung auch eine umlaufende Abschrägung sein, die die gesamte Umfangskontur des Innenkörpers 19 bzw. des Deckels 29 an der Reinigungsfläche 21 umgibt.

Der Innenkörper 19 ist bei dem hier dargestellten Ausführungsbeispiel zweiteilig ausgestaltet; die Erfindung kann natürlich auch dann angewendet werden, wenn der Innenkörper 19 einteilig ausgebildet ist, wenn z.B. der Permanentmagnet 23, oder allgemein das magnetische Element 23 in Kunststoff eingegossen ist. Auch dann können die Abschrägung 24, 25 und/oder der Vorsprung 35 vorhanden sein.

Der Innenkörper 19 ist bezüglich seines Umfangs langgestreckt rechteckig ausgebildet dargestellt; er kann selbstverständlich auch eine quadratische, kreisförmige, bogenförmige oder ovale Umfangskontur aufweisen.

Der Innenkörper 19 kann auch schwimmfähig mit einem oder mehreren Hohlräumen ausgebildet sein. Als Material kann hierzu insbesondere auch Schaumstoff mit kleinen mit Luft gefüllten Hohlräumen verwendet werden, in den das magnetische Element 23 eingebettet ist. In diesem Falle könnte der Innenkörper 19 einstückig ausgebildet sein.

### Liste der Bezugszeichen

- 10: Aquarium
- 11: erstes Aquariumsfenster
- 12: zweites Aquariumsfenster
- 13: erster Abschnitt der Dichtungsmasse
- 14: zweiter Abschnitt der Dichtungsmasse
- 15: Dichtungsmasse
- 16: Innenfläche
- 17: Wasser
- 18: Reinigungsvorrichtung
- 19: Innenkörper
- 20: Außenkörper
- 21: Reinigungsflächen
- 22: Griff
- 23: Permanentmagnet
- 24: Abschrägung
- 25: Abschrägung
- 26: Auslaufbereich
- 27: Napf
- 28: Freie Kante
- 29: Deckel
- 30: Längsseitenkante
- 31: Schmalseitenkante
- 32: Leiste
- 33: winkelige Linie
- 34: Schmalseitenkante
- 35: Vorsprung
- 36: Permanentmagnet
- 37: Führungsleiste
- 38: Innenfläche
- α: Winkel

## Patentansprüche

1. Reinigungsvorrichtung (18) für die Innenfläche eines Fensters (11,12) eines Aquariums (10), an die ein flüssiges Medium (17), insbesondere Wasser, angrenzt, mit einem Innenkörper (19), der eine Reinigungsfläche (21) aufweist, die mit der Innenfläche (16,38) des Fensters (11,12) in Berührung bringbar ist, und mit einem Außenkörper (20), wobei im Innen- und Außenkörper (19,20) zusammenwirkende magnetische Elemente (22,24) vorgesehen sind, die eine Anziehungskraft aufeinander ausüben, derart, dass der Innenkörper (19) bei einer Bewegung des Außenkörpers (20) entlang des Fensters (11) gleichsinnig mit diesem verschoben wird, wobei der Innenkörper (19) an die Reinigungsfläche (21) anschließend wenigstens in einem Teilbereich des Umfangs der Reinigungsfläche (21) eine glattwandige Abschrägung (24,25) aufweist, die mit der Reinigungsfläche (21) einen Winkel (α) größer 90° einschließt,
**dadurch gekennzeichnet,**
**dass** am Innenkörper (19) mit der Reinigungsfläche (21) fluchtend ein zungenartiger Vorsprung (35) angeordnet ist, in den sich die Reinigungsfläche (21) fortsetzt und mit dem die Innenfläche (16,38) auch hinter einem Einbauteil reinigbar ist.

2. Reinigungsvorrichtung nach Anspruch 1,
**dadurch gekennzeichnet,**
**dass** die Seitenwandungen des Innenkörpers (19) im Wesentlichen senkrecht zu der Reinigungsfläche (21) angeordnet sind, und das die Abschrägung (24,25) die Reinigungsfläche (21) mit den Seitenwandungen verbindet.

3. Reinigungsvorrichtung nach Anspruch 1,
**dadurch gekennzeichnet,**
**dass** sich an die Reinigungsfläche (21) eine vorspringende Leiste (32) anschließt, an der die Abschrägung (24,25) vorgesehen ist.

4. Reinigungsvorrichtung nach einem der vorhergehenden Ansprüche,
**dadurch gekennzeichnet,**
**dass** der Innenkörper (19) eine mehreckige, insbesondere rechteckige oder quadratische Umfangskontur aufweist, und dass die Abschrägung (24,25) an wenigstens einer Seitenwandung des Innenkörpers (19) vorgesehen ist.

5. Reinigungsvorrichtung nach einem der vorhergehenden Ansprüche,
**dadurch gekennzeichnet,**
**dass** die Umfangskontur des Innenkörpers (19) bogenförmig, insbesondere kreis- oder ovalförmig, ist.

6. Reinigungsvorrichtung nach einem der vorhergehenden Ansprüche,
**dadurch gekennzeichnet,**
**dass** der Innenkörper (19) aus einem Napf (27) und einem an der Stirnkante der Napfwand befestigten Deckel (29) zusammengesetzt ist.

7. Reinigungsvorrichtung nach Anspruch 6,
**dadurch gekennzeichnet,**
**dass** die Abschrägung (24,25) und/oder der Vorsprung (35) am Deckel (29) angeformt ist.

8. Reinigungsvorrichtung nach einem der vorhergehenden Ansprüche,
**dadurch gekennzeichnet,**
**dass** der Innenkörper (19) wenigstens einen luftgefüllten Hohlraum aufweist.

9. Reinigungsvorrichtung nach Anspruch 8,
**dadurch gekennzeichnet,**
**dass** der Innenkörper (19) einstückig aus einem eine Anzahl von luftgefüllten Hohlräumen aufweisenden Schaumstoff gebildet ist, in welchen das magnetische Element (23) eingebettet ist.

10. Reinigungsvorrichtung nach einem der vorhergehenden Ansprüche,
**dadurch gekennzeichnet,**
**dass** die Abschrägung (24,25) ebenflächig ausgebildet ist, oder eine konkave, der Außenform der Dichtungsmasse (15) angepasste Wölbung aufweist.

## Claims

1. Cleaning device (18) for the inner surface of a window (11, 12) of an aquarium (10) adjoined by a liquid medium (17), in particular water, comprising an inner body (19) having a cleaning surface (21), which can be brought into contact with the inner surface (16, 38) of the window (11, 12), and comprising an outer body (20), there being provided in the inner and outer bodies (19, 20) cooperating magnetic elements (22, 24) which exert a force of attraction on one another, such that the inner body (19) is displaced in the same direction as the outer body (20) as said outer body moves along the window (11), the inner body (19) having a smooth-walled bevel (24, 25) connected to the cleaning surface (21) at least in a portion of the perimeter of the cleaning surface (21), which bevel encloses an angle (α) greater than 90° with the cleaning surface, **characterised in that** there is arranged, on the inner body (19), a tongue-like projection (35) which is aligned with the cleaning surface (21), into which the cleaning surface (21) continues and with which the inner surface (16, 38) can be cleaned, even behind a fixture.

2. Cleaning device according to claim 1, **characterised in that** the side walls of the inner body (19) are arranged substantially perpendicular to the cleaning surface (21) and **in that** the bevel (24, 25) connects the cleaning surface (21) with the side walls.

3. Cleaning device according to claim 1, **characterised in that** a projecting strip (32) on which the bevel (24, 25) is provided is attached to the cleaning surface (21).

4. Cleaning device according to any one of the preceding claims, **characterised in that** the inner body (19) has a polygonal, in particular rectangular or square perimeter contour, and **in that** the bevel (24, 25) is provided on at least one side wall of the inner body (19).

5. Cleaning device according to any one of the preceding claims, **characterised in that** the perimeter contour of the inner body (19) is curved, in particular circular or oval-shaped.

6. Cleaning device according to any one of the preceding claims, **characterised in that** the inner body (19) is composed of a bowl (27) and a cover (29) fastened to the leading edge of the bowl wall.

7. Cleaning device according to claim 6, **characterised in that** the bevel (24, 25) and/or the projection (35) is formed integrally with the cover (29).

8. Cleaning device according to any one of the preceding claims, **characterised in that** the inner body (19) has at least one air-filled cavity.

9. Cleaning device according to claim 8, **characterised in that** the inner body (19) is formed in one piece from a foam which has a number of air-filled cavities and in which the magnetic element (23) is embedded.

10. Cleaning device according to any one of the preceding claims, **characterised in that** the bevel (24, 25) is formed so as to be planar, or has a concave arch which matches the outer shape of the sealant (15).

## Revendications

1. Dispositif de nettoyage (18) pour la surface intérieure d'une fenêtre (11, 12) d'un aquarium (10), qui est contiguë à un fluide (17) liquide, en particulier de l'eau, comprenant un corps intérieur (19), qui présente une surface de nettoyage (21), laquelle peut être amenée en contact avec la surface intérieure (16, 38) de la fenêtre (11, 12), et un corps extérieur (20), des éléments (22, 24) magnétiques coopérant étant prévus dans le corps intérieur et le corps extérieur (19, 20), lesquels exercent une force d'attraction l'une sur l'autre, de telle sorte que le corps intérieur (19) est déplacé lors d'un mouvement du corps extérieur (20) le long de la fenêtre (11) dans le même sens avec celui-ci, le corps intérieur (19) présentant à la suite de la surface de nettoyage (21), au moins dans une zone partielle du pourtour de la surface de nettoyage (21), un chanfrein (24, 25) à paroi lisse, qui forme avec la surface de nettoyage (21) un angle (α) supérieur à 90°,
**caractérisé en ce que**
une saillie (35) en forme de lame, dans laquelle la surface de nettoyage (21) se prolonge et avec laquelle la surface intérieure (16, 38) peut être nettoyée également derrière une pièce à monter, est disposée sur le corps intérieur (19) en alignement avec la surface de nettoyage (21).

2. Dispositif de nettoyage selon la revendication 1,
**caractérisé en ce que**
les parois latérales du corps intérieur (19) sont disposées de façon sensiblement perpendiculaire à la surface de nettoyage (21), et **en ce que** le chanfrein (24, 25) relie la surface de nettoyage (21) aux parois latérales.

3. Dispositif de nettoyage selon la revendication 1,
**caractérisé en ce que**
à la surface de nettoyage (21) se raccorde une baguette (32) saillante sur laquelle est prévue le chanfrein (24, 25).

4. Dispositif de nettoyage selon l'une quelconque des revendications précédentes,
**caractérisé en ce que**
le corps intérieur (19) présente un contour périphérique polygonal, en particulier rectangulaire ou carré, et **en ce que** le chanfrein (24, 25) est prévu sur au moins une paroi latérale du corps intérieur (19).

5. Dispositif de nettoyage selon l'une quelconque des revendications précédentes,
**caractérisé en ce que**
le contour périphérique du corps intérieur (19) est en forme d'arc, en particulier en forme de cercle ou d'ovale.

6. Dispositif de nettoyage selon l'une quelconque des revendications précédentes,
**caractérisé en ce que**
le corps intérieur (19) est composé d'un godet (27) et d'un couvercle (29) fixés sur l'arête avant de la paroi de godet.

7. Dispositif de nettoyage selon la revendication 6,
**caractérisé en ce que**
le chanfrein (24, 25) et/ou la saillie (35) est formé sur le couvercle (29).

8. Dispositif de nettoyage selon l'une quelconque des revendications précédentes,
**caractérisé en ce que**
le corps intérieur (19) présente au moins une cavité remplie d'air.

9. Dispositif de nettoyage selon la revendication 8,
**caractérisé en ce que**
le corps intérieur (19) est formé d'une seule pièce à base d'une mousse présentant un certain nombre de cavités remplies d'air, dans laquelle l'élément (23) magnétique est intégré.

10. Dispositif de nettoyage selon l'une quelconque des revendications précédentes,
**caractérisé en ce que**
le chanfrein (24, 25) est conçu avec une surface plane, ou présente une courbure concave, adaptée à la forme extérieure de la masse d'étanchéité (15).
